# EUROPÄISCHE PATENTSCHRIFT

(11) **EP 2 096 799 B1**
(45) Veröffentlichungstag und Bekanntmachung des Hinweises auf die Patenterteilung: **19.01.2011**
(21) Anmeldenummer: 09006695.2
(22) Anmeldetag: 24.01.2007
(51) Int. Cl.: H04L 12/437

(54) **Redundantes Kommunikationsnetzwerk**
Redundant communications network
Réseau de communication redondant

(30) Priorität: 30.01.2006 DE 102006004339
(43) Veröffentlichungstag der Anmeldung: 02.09.2009
(62) Teilanmeldung aus: 07001438.6
(73) Patentinhaber: Robert Bosch GmbH, 70469 Stuttgart (DE)
(72) Erfinder: Schultze, Stephan Dr., 97816 Lohr am Main (DE); Tchekler, Alexander, 86169 Augsburg (DE); Ackermann, Roland, 97816 Lohr am Main (DE); Noack, Gerald, 97816 Lohr am Main (DE)

(56) Entgegenhaltungen:
- EP-A- 0 980 166
- EP-A- 1 075 110
- EP-A- 1 133 106
- EP-A- 1 585 266
- WO-A-03/049366
- DE-A1- 19 637 312
- DE-A1- 19 803 686
- DE-A1- 19 904 894
- DE-A1- 19 927 635
- INTERESSENSGEMEINSCHAFT SERCOS INTERFACE E V: "SERCOS-III (Dritte Generation SERCOS interface)" INTERNET CITATION, [Online] April 2004 (2004-04), XP002356906 Gefunden im Internet: URL:http://www.sercos.de/pdf/SERCOS-III_V1 34d_public.pdf> [gefunden am 2005-12-01]
- SCHEMM, EBERHARD: "Innovation durch Kombination" PRAXIS PROFILINE - SERCOS INTERFACE, 31. Mai 2004 (2004-05-31), Seiten 26-28, XP002444455 Vogel Verlag, Würzburg ISBN: 3-8259-1926-9
- SCHWEINZER H ET AL: "Shared Data on Interbus" INTERNET CITATION, [Online] XP002269738 Gefunden im Internet: URL:http://www.ict.tuwien.ac.at/komzent/in terbus/SharedData.pdf> [gefunden am 2004-02-10]
- TUERKE C: "INTERBUS-S IN DER REGELSCHLEIFE. DATENTRANSFER VON SLAVE ZU SLAVE MACHT'S MOEGLICH" ELEKTRONIK, WEKA FACHZEITSCHRIFTENVERLAG, POING, DE, Bd. 44, Nr. 12, 13. Juni 1995 (1995-06-13), Seiten 79,81-84, XP000515422 ISSN: 0013-5658

## Beschreibung

Die Erfindung befasst sich mit einem Verfahren zum Betreiben eines redundanten, ringförmigen Kommunikationsnetzwerkes sowie mit einem Kommunikationsnetzwerk, welches sich dieses Verfahrens bedient.

Die DE 198 03 686 A1 betrifft ein Verfahren zur Kommunikation gleichberechtigter Stationen eines ringförmigen, seriellen Lichtwellenleiter-Busses, die EP 1 585 266 A2 zeigt ein Kommunikationssystem mit einem Hauptteilnehmer und Nebenteilnehmern. Das Verhalten der Kommunikationssysteme bei einer Störung wird in den genannten Druckschriften nicht beschrieben.

Aus dem Stand der Technik sind ringförmige Kommunikationssysteme mit Redundanzfunktion, die einen Hauptteilnehmer ("Master") und Nebenteilnehmer ("Slaves") umfassen, bekannt. Derartige Kommunikationssysteme sind bspw. in der WO 03/073704 A1 oder der US 2004/223503 A1 offenbart. Ein beispielhaftes Kommunikationssystem mit Redundanzfunktion wird durch den Standard SERCOS-III definiert, der bspw. in der Veröffentlichung "SERCOS-III (Dritte Generation SERCOS interface)", Version 1.3.4, April 2004 der Interessensgemeinschaft SERCOS interface e.V. oder der Veröffentlichung "Innovation durch Kombination" PRAXIS PROFILINE - SERCOS INTERFACE, 31. Mai 2004 (2004-05-31), Seiten 26-28 näher beschrieben wird.

Die deutsche Patentanmeldung mit dem Aktenzeichen DE 10 2004 041 093 beschreibt ein solches ringförmiges Kommunikationssystem in Figur 1 a, welches beispielsweise ein Steuerungs- und Antriebssysteme für wellenlose Produktionsmaschinen darstellen könnte. Derartige Systeme nutzen einen so genannten gegenläufigen Doppelring zur Kommunikation. Im Redundanzfalle (Fehlerfalle) zerfällt der Doppelring in zwei Linientopologien. Eine Kommunikation zwischen Nebenstationen, die nicht von der Störung betroffen sind, erfolgt dann ausschließlich durch das Umkopieren aller von Nebenteilnehmern gesendeten Daten über die Hauptstation. Dies erhöht die Auslastung der Hauptstation erheblich und verursacht Laufzeitverzögerungen zwischen unmittelbar benachbarten Nebenteilnehmern.

Die Aufgabe der Erfindung besteht darin, eine Datenübertragung im Fehlerfalle sicher zu stellen, den Hauptteilnehmer bestmöglich zu entlasten und Laufzeitverzögerungen zwischen Nebenteilnehmern weitestgehend zu vermeiden.

Gelöst wird die Aufgabe mittels eines Verfahrens zum Betreiben eines redundanten, ringförmigen, insbesondere gegenläufig kommunizierenden, Kommunikationsnetzwerkes mit zumindest einem Hauptteilnehmer und zumindest zwei Nebenteilnehmern, welche mittels einer Datenübertragungseinrichtung miteinander kommunizieren, wobei die Nebenteilnehmer unmittelbar mittels der Datenübertragungseinrichtung miteinander kommunizieren und/oder mittelbar mittels des Hauptteilnehmers und der Datenübertragungseinrichtung miteinander kommunizieren, indem der Hauptteilnehmer die zwischen den Nebenteilnehmern auszutauschenden Daten zwischen seinen Datenübertragungseinrichtungsanschlüssen, insbesondere nach Maßgabe eines Übertragungstaktes, austauscht.

Die Datenübertragungseinrichtung könnte beispielsweise mittels einer leitungs- oder funkgebundenen Datenübertragung realisiert sein, welche eine bidirektionale Kommunikation zulässt. Bei den Datenübertragungseinrichtungsanschlüssen des Hauptteilnehmers handelt es sich um die Schnittstellen zwischen Hauptteilnehmer und Datenübertragungseinrichtung. Da es sich um ein ringförmiges, redundantes System handelt, umfasst jeder Teilnehmer (Nebenteilnehmer und Hauptteilnehmer) vier Anschlüsse für die Datenübertragungseinrichtung (jeweils 2 Eingänge und 2 Ausgänge). Die Erfindung schafft ein redundantes und fehlersicheres System, weil die Nebenteilnehmer unabhängig vom Hauptteilnehmer unmittelbar miteinander kommunizieren können, wodurch sie diesen entlasten. Unmittelbar benachbarte Nebenteilnehmer kommunizieren somit auf dem kürzesten Weg miteinander, dies reduziert die Laufzeit der Daten. Zusätzlich besteht im Falle einer Funktionsstörung der Datenübertragungseinrichtung für die Nebenteilnehmer trotzdem noch die Möglichkeit mittels des Hauptteilnehmers zu kommunizieren.

Vorzugsweise tauscht der Hauptteilnehmer ausschließlich bei einer Unterbrechung der Datenübertragung zwischen zwei Nebenteilnehmern alle von den Nebenteilnehmern gesendeten Daten nach Maßgabe eines Übertragungstaktes zwischen Nebenteilnehmern aus. Hierbei werden auch Daten von Nebenteilnehmern berücksichtigt, welche nicht von der Störung betroffen sind. Das bedeutet, sobald ein Fehler in der Doppelringtopologie vorliegt, beginnt die Hauptstation, alle Daten von Nebenstationen, welche am ersten Datenübertragungseinrichtungsanschluss angeschlossen sind, auf den zweiten Datenübertragungseinrichtungsanschluss, an dem weitere Nebenstationen angeschlossen sind, zu übertragen und umgekehrt. Damit wird sichergestellt, dass jeder Nebenteilnehmer aus dem Datenstrom die für ihn bestimmten Daten empfangen kann. Im fehlerfreien Betrieb kommunizieren die Nebenteilnehmer effizient unter Umgehung der Hauptstation unmittelbar miteinander. Die Auslastung der Hauptteilnehmer-CPU wird somit gering gehalten, wobei trotz des Fehlers eine Kommunikation aufrecht erhalten werden kann.

Alternativ tauscht der Hauptteilnehmer ausschließlich Querkommunikationsdaten (von Nebenteilnehmern für Nebenteilnehmer bestimmte Daten) bei einer Störung der Datenüberträgungseinrichtung zwischen den Nebenteilnehmern nach Maßgabe eines Übertragungstaktes aus. Es werden nun nicht mehr alle von den Nebenteilnehmern gesendeten Daten ausgetauscht, die auch Daten für einen Hauptteilnehmer enthalten könnten, sondern nur noch diejenigen Daten, welche tatsächlich auch für andere Nebenteilnehmer bestimmt sind. Daten, welche zwischen Nebenteilnehmer und Hauptteilnehmer auszutauschen sind, werden somit nicht für andere Nebenteilnehmer zugänglich gemacht. Das Verfahren wird dadurch effizienter, denn das Datenaufkommen wird in diesem Falle wesentlich verringert.

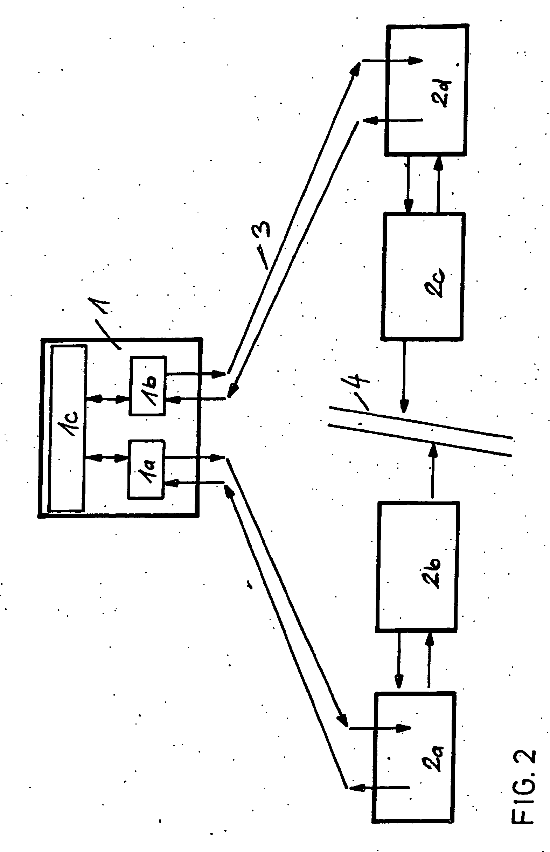

Bevorzugt wird das Verfahren insofern noch verfeinert, als ausschließlich diejenigen Nebenteilnehmer, welche von einer Störung unmittelbar betroffen sind, mittels des Hauptteilnehmers kommunizieren, indem insbesondere diese die Störung erkennen und dem Hauptteilnehmer melden. Im Fehlerfalle lokalisiert die Hauptstation die zu kopierenden Daten anhand des nun bekannten Fehlerortes. Die Hauptstation ermittelt demnach nur diejenigen Daten, die von einer noch funktionsfähigen Teillinie zur anderen noch funktionsfähigen Teillinie des Kommunikationsnetzwerkes (siehe Figur 2) ausgetauscht werden müssen. Nur diese Daten werden umkopiert. Daten zwischen Nebenteilnehmern, welche noch unmittelbar miteinander kommunizieren können, sind vom Datenstrom ausgenommen. Lediglich die von der Störung betroffenen Nebenteilnehmerdaten von Nebenteilnehmern, welche nicht mehr unmittelbar zwischen den Nebenteilnehmer übertragen werden können, finden daher ihren Weg über den Hauptteilnehmer. Die Störung wird mittels der Datenübertragungseinrichtung an den Hauptteilnehmer kommuniziert und der Hauptteilnehmer koordiniert anhand der lokalisierten Störung die Kommunikation. Dieses Verfahren erhöht die Effizienz aufgrund der reduzierten Datenlast im Hauptteilnehmer.

Erfindungsgemäß bearbeitet der Hauptteilnehmer die zu einem Nebenteilnehmer weitergeleitete Daten derart, dass diese von unmittelbar zwischen Nebenteilnehmern ausgetauschten Daten unterscheidbar sind, beispielsweise durch Manipulation von Datenfeldern innerhalb der der Datenübertragung zugrunde liegenden Datentelegramme. Auch eine derartige Datenbearbeitung durch den Nebenteilnehmer ist denkbar. Dies ist besonders vorteilhaft, weil aufgrund der mittelbaren Datenübertragung über den Hauptteilnehmer eine Laufzeitverzögerung der Datentelegramme resultieren kann. Die von dieser Laufzeitverzögerung betroffenen Daten werden mittels des Hauptteilnehmers nun gesondert markiert, sind somit identifizierbar und gegebenenfalls nachträglich bearbeitbar.

Ergänzend zu dem zuvor genannten Verfahrensschritt werden die Daten vorteilhafterweise durch die Nebenteilnehmer und/oder den Hauptteilnehmer einer zusätzlichen Datenbearbeitung unterzogen. Eine derartige Sonderbehandlung der laufzeitverzögerten Daten, beispielsweise mittels einer Extrapolation, ermöglicht gezielte Laufzeitkorrekturen oder beispielsweise eine Mittelwertbildung. Fehlern im System aufgrund fehlerhafter Daten wird somit vorgebeugt, das System wird stabiler und weniger wartungsanfällig.

Vorzugsweise basiert ein leitungsgebundenes Kommunikationsnetzwerk auf dem erfindungsgemäßen Verfahren, wobei dieses auf der Ethernettechnologie oder auf der Lichtwellenleitertechnologie basiert und die Kommunikation auf einer Feldbusnorm basiert. Die Ethernettechnologie ermöglicht eine einfache Handhabung der Verbindungsleitungen, da diese in der Regel auf Kupferleitungen basieren. Ethernet ist erprobt, weniger kostenintensiv und weniger fehleranfällig. Die Lichtwellenleitertechnologie ist unanfällig gegenüber elektromagnetischer Störungen und erhöht die Datensicherheit. Die Realisierung des Kommunikationsnetzwerkes im Rahmen eines Feldbusnetzwerkes (Profibus, SERCOS, CANopen, etc.) ermöglicht den Zugang zur Automatisierungstechnik. Bei Verwendung einer echtzeitfähigen Kommunikation erschließen sich weitere vorteilhafte Anwendungsfelder, insbesondere bei der Verarbeitung zeitkritischer Daten.

Ganz besonders bevorzugt verwendet ein Antriebssystem, insbesondere für Automatisierungszwecke, ein solches Kommunikationsnetzwerk, wobei dieses als Hauptteilnehmer eine elektrische Steuerung und/oder Antriebsregler und als Nebenteilnehmer elektrische Steuerungen und/oder elektrische Antriebsregler umfasst. Das erfindungsgemäße Konzept erhöht die Verfügbarkeit der vom Automatisierungssystem umfassten Maschinen.

Die Erfindung wird anhand der nachfolgend gezeigten konkreten Ausgestaltungsbeispiele näher erläutert. Es zeigen:
Figur 1 ein störungsfrei arbeitendes, redundantes Kommunikationsnetzwerk.
Figur 2 ein störungsbehaftetes, redundantes Kommunikationsnetzwerk.

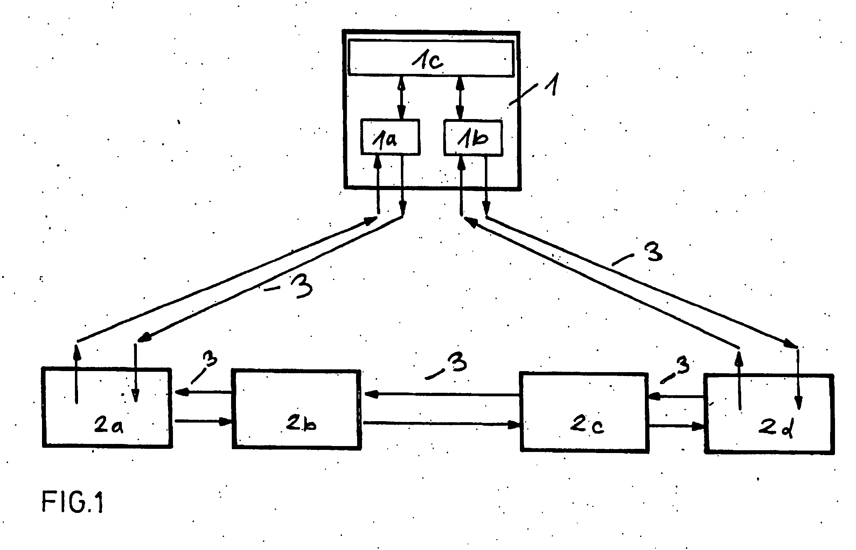

Das in Figur 1 gezeigte Kommunikationsnetzwerk umfasst einen Hauptteilnehmer 1 mit einer Datenverarbeitungseinrichtung 1c und zwei Netzwerkanschlüssen 1a und 1b sowie Nebenteilnehmer 2a, b, c, d, welche mittels der bidirektionalen Verbindungsleitung 3 miteinander verbunden sind. Die bidirektionale Verbindungsleitung 3 ermöglicht einen unmittelbaren und bidirektionalen Datenaustausch zwischen den einzelnen Nebenteilnehmern 2a, b, c, d und dem Hauptteilnehmer 1. Zusätzlich zu der bidirektionalen Verbindungsleitung 3 in Form eines gegenläufigen Ringes wird Redundanz dadurch geschaffen, dass Nebenteilnehmer 2a, b, c, d auch mittels des Hauptteilnehmers 1 miteinander kommunizieren können, indem der Hauptteilnehmer am Eingang seines Anschlusses 1a (Eingang/Ausgang) ankommende Daten mittels der Datenverarbeitung 1 c auf den Ausgang des Anschlusses 1b (Eingang/Ausgang) weiterleitet. Somit besteht beispielsweise für den Nebenteilnehmer 2b entweder die Möglichkeit, unmittelbar mit dem Nebenteilnehmer 2c mittels der bidirektionalen Verbindung 3, oder mittelbar mittels des Hauptteilnehmers 1 zu kommunizieren.

Gemäß Figur2 kann im Falle einer Leitungsunterbrechung 4 beispielsweise zwischen den Nebenteilnehmern 2b und 2c die Erfindung dazu genutzt werden, den Datenverkehr zwischen den Nebenteilnehmern 2b und 2c über den Hauptteilnehmer 1 aufrecht zu erhalten. Gemäß Figur 2 zerfällt das ringförmige Kommunikationsnetzwerk in eine linienförmige Topologie, wobei der Hauptteilnehmer 1 zusammen mit den Nebenteilnehmern 2a und 2b eine erste Teillinie und der Hauptteilnehmer 1 zusammen mit den Nebenteilnehmern 2c und 2d eine zweite Teillinie bildet. Der Nebenteilnehmer 2a könnte nun ebenso wie der Nebenteilnehmer 2b mittels der weiter oben geschilderten Datenweiterleitungsfunktion des Hauptteilnehmers 1 mit dem Nebenteilnehmer 2c und/oder 2d kommunizieren. Lediglich im Fehlerfalle wird somit der Umweg über den Hauptteilnehmer 1 gewählt, wobei trotz des Fehlers eine Kommunikation aufrecht erhalten bleibt. Der Hauptteilnehmer 1 tauscht damit ausschließlich Querkommunikationsdaten (Nutzdaten, welche ausschließlich zwischen Nebenteilnehmern ausgetauscht werden und keine Daten für den Hauptteilnehmer als solchen umfassen) bei einer Leitungsunterbrechung zwischen den Nebenteilnehmern nach Maßgabe eines Übertragungstaktes aus und konzentriert sich dabei lediglich auf die zur Querkommunikation zwischen den Nebenteilnehmern erforderlichen Daten, wodurch das Verfahren effizienter wird, weil das Datenaufkommen in diesem Falle wesentlich geringer ist.

Das Kommunikationsnetzwerk könnte auch so konzipiert sein, dass ausschließlich diejenigen Nebenteilnehmer 2b, 2c, welche von der Leitungsunterbrechung 4 unmittelbar betroffen sind, mittels des Hauptteilnehmers 1 kommunizieren, indem ein Nebenteilnehmer 2b, 2c eine physikalisch bedingte Unterbrechung 4 im Kommunikationsnetzwerk erkennt und diese Unterbrechung dem Hauptteilnehmer 1 mittels der noch funktionsfähigen Teillinie, an der er angeschlossen ist, meldet. Bei dieser Konfiguration würden die Nebenteilnehmer 2a und 2b bzw. 2c und 2d nach wie vor wie im fehlerfreien Fall unmittelbar miteinander kommunizieren. Die Daten zwischen diesen Nebenteilnehmern sind somit von dem Datenstrom ausgenommen, der über den Hauptteilnehmer 1 läuft. Dies reduziert die vom Hauptteilnehmer zu verarbeitende Datenmenge und erhöht die Effizienz des Netzwerkes zusätzlich.

Der Hauptteilnehmer 1 kann im Falle der Weiterleitung an Nebenteilnehmer 2a,b,c,d Daten derart bearbeiten, dass diese von unmittelbar zwischen Nebenteilnehmern ausgetauschten Daten unterscheidbar sind. Die Nebenteilnehmer 2a,b,c,d sind dann in der Lage, gegebenenfalls einer Datennachbearbeitung zu unterziehen, um beispielsweise Laufzeitfehler zu korrigieren. Die Hauptstation 1 kennt in diesem Falle den Fehlerort und ist darüber informiert welche Nebenstationen nicht mehr direkt miteinander kommunizieren können.

Auch im fehlerfreien Falle könnte die Hauptstation 1 die Querkommunikationsdaten von einem Abschluss 1 a zum anderen Anschluss 1b und umgekehrt kopieren, so dass beide Datenpfade, d.h. die unmittelbare Kommunikation zwischen den Nebenteilnehmern und die mittelbare Kommunikation über den Hauptteilnehmer, zur Verfügung steht. Die im Hauptteilnehmer 1 und den Nebenteilnehmern 2a, b, c, d zur Verfügung stehende Rechenleistung kann somit anwendungsspezifisch genutzt werden.

Die bidirektionalen Verbindungsleitungen 3 basieren vorzugsweise auf der Ethernettechnologie (Kupferleitungen) oder auf der Lichtwellenleitertechnologie. Die Verwendung von im Rahmen der gängigen Feldbusnormen üblichen Protokollen (Profibus, SERCOS I, II, III) ermöglicht den Zugang zur Welt der Automatisierungstechnik, so dass als Hauptteilnehmer 1 beispielsweise eine elektrische Steuerung und als Nebenteilnehmer 2a, 2b, 2c, 2d elektrische Steuerungen und/oder elektrische Antriebsregler umfasst sein können. Das erfindungsgemäße Konzept erhöht die Verfügbarkeit der Maschinen, welche mittels des Antriebssystems realisiert sind.

Die mittels Steuerungen realisierten Nebenteilnehmer stellen so genannte Unterstationen und der Hauptteilnehmer eine so genannte Kopfstation dar. An jeder Unterstation können Antriebsregler in Ring- oder Linienform angeschlossen sein. Auch an der Kopfstation selbst ist das möglich, wobei diese jedoch bevorzugt zentrale Aufgaben übernimmt. Die in den Figuren 1 und 2 gezeigte Kopfstation erfüllt ausschließlich übergeordnete, dezentrale Steueraufgaben, während die Unterstationen zentrale Steueraufgaben erledigen.

### Bezugszeichenliste

- 1: Hauptteilnehmer
- 1a: Anschluss (Eingang- und Ausgang) 1
- 1b: Anschluss (Eingang- und Ausgang) 2
- 1c: Datenverarbeitung
- 2a,b,c,d: Nebenteilnehmer
- 3: Verbindungsleitung
- 4: Unterbrechung

## Patentansprüche

1. Verfahren zum Betreiben eines Kommunikationsnetzwerkes mit zumindest einem Hauptteilnehmer (1) und zumindest zwei Nebenteilnehmern (2a,b,c,d), welche mittels einer Datenübertragungseinrichtung (3) miteinander kommunizieren, wobei die Nebenteilnehmer (2a,b,c,d) unmittelbar mittels der Datenübertragungseinrichtung (3) miteinander kommunizieren und/oder mittelbar mittels des Hauptteilnehmers (1) und der Datenübertragungseinrichtung (3) miteinander kommunizieren, indem der Hauptteilnehmer (1) die zwischen den Nebenteilnehmern (2a,b,c,d) auszutauschenden Daten zwischen seinen Datenübertragungseinrichtungsanschlüssen (1a, 1 b) austauscht **dadurch gekennzeichnet, daß** der hauptteilnehmer diese Daten derart bearbeitet, dass sie von unmittelbar zwischen Nebenteilnehmern (2a, b, c, d) ausgetauschten Daten unterscheidbar sind.

2. Verfahren nach Anspruch 1, wobei ein Nebenteilnehmer diese Daten derart bearbeitet, dass sie von unmittelbar zwischen Nebenteilnehmern (2a, b, c, d) ausgetauschten Daten unterscheidbar sind.

3. Verfahren nach Anspruch 1 oder 2, wobei diese Daten mittels des Haupteilnehmers (1) gesondert markiert werden.

4. Verfahren nach einem der vorstehenden Ansprüche, wobei diese Daten mittels der Nebenteilnehmer (2a, b, c, d) und/oder des Hauptteilnehmers (1) einer zusätzlichen Datenbearbeitung unterzogen werden.

5. Verfahren nach Anspruch 4, wobei die zusätzliche Datenbearbeitung eine Extrapolation ist.

6. Verfahren nach einem der vorstehenden Ansprüche, wobei der Hauptteilnehmer (1) diese Daten nach Maßgabe eines Übertragungstaktes austauscht.

7. Verfahren nach einem der vorstehenden Ansprüche, wobei ausschließlich diejenigen Nebenteilnehmer (2b, c), welche aufgrund einer Störung (4) unmittelbar untereinander nicht mehr kommunizieren können, mittels des Hauptteilnehmers (1) kommunizieren, wobei die Störung (4) insbesondere mittels der Nebenteilnehmer (2b, c) erkannt und/oder lokalisiert wird.

8. Verfahren nach Anspruch 7, wobei die Störung mittels der Datenübertragungseinrichtung (3) an den Hauptteilnehmer (1) kommuniziert wird und der Hauptteilnehmer (1) anhand der lokalisierten Störung (4) die Kommunikation koordiniert.

9. Verfahren nach einem der vorstehenden Ansprüche, wobei der Hauptteilnehmer (1) ausschließlich von Nebenteilnehmern (2a, b, c, d) für Nebenteilnehmer (2a, b, c, d) bestimmte Daten bei einer Störung der Datenübertragung (4) zwischen Nebenteilnehmern (2a, b, c, d) austauscht.

10. Verfahren nach einem der Ansprüche 1 bis 8, wobei der Hauptteilnehmer (1) ausschließlich bei einer Störung der Datenübertragung (4) zwischen zwei Nebenteilnehmern (2b, c) alle von den Nebenteilnehmern (2a, b, c, d) gesendeten Daten austauscht.

11. Kommunikationsnetzwerk zur Durchführung eines Verfahrens nach einem der vorherigen Ansprüche, wobei dieses auf der Ethernettechnologie oder auf der Lichtwellenleitertechnologie basiert, wobei die Datenübertragung insbesondere auf einer Feldbusnorm basiert.

12. Antriebssystem, insbesondere für Automatisierungszwecke, mit einem Kommunikationsnetzwerk nach Anspruch 11, wobei dieses als Hauptteilnehmer (1) eine elektrische Steuerung und/oder elektrische Antriebsregler und als Nebenteilnehmer (2a,b,c,d) elektrische Steuerungen und/oder elektrische Antriebsregler umfasst.

## Claims

1. Method for operating a communication network having at least one principal subscriber (1) and at least two ancillary subscribers (2a, b, c, d) which communicate with one another by means of a data transmission device (3), wherein the ancillary subscribers (2a, b, c, d) communicate with one another directly by means of the data transmission device (3) and/or communicate with one another indirectly by means of the principal subscriber (1) and the data transmission device (3) by virtue of the principal subscriber (1) interchanging the data which are to be interchanged between the ancillary subscribers (2a, b, c, d) between its data transmission device connections (1a, 1b), **characterized in that** the principal subscriber (1) edits said data such that they can be distinguished from data interchanged directly between ancillary subscribers (2a, b, c, d).

2. Method according to Claim 1, wherein an ancillary subscriber edits said data such that they can be distinguished from data interchanged directly between ancillary subscribers (2a, b, c, d).

3. Method according to Claim 1 or 2, wherein said data are marked separately by means of the principal subscriber (1).

4. Method according to one of the preceding claims, wherein said data are subjected to additional data editing by means of the ancillary subscribers (2a, b, c, d) and/or the principal subscriber (1).

5. Method according to Claim 4, wherein the additional data editing is extrapolation.

6. Method according to one of the preceding claims, wherein the principal subscriber (1) interchanges said data in accordance with a transmission clock.

7. Method according to one of the preceding claims, wherein exclusively those ancillary subscribers (2b, c) which are no longer able to communicate with one another directly on account of a fault (4) communicate by means of the principal subscriber (1), the fault (4) being recognized and/or located particularly by means of the ancillary subscribers (2b, c).

8. Method according to Claim 7, wherein the fault is communicated to the principal subscriber (1) by means of the data transmission device (3), and the principal subscriber (1) coordinates the communication using the located fault (4).

9. Method according to one of the preceding claims, wherein the principal subscriber (1) exclusively interchanges data determined by ancillary subscribers (2a, b, c, d) for ancillary subscribers (2a, b, c, d) in the event of a fault in the data transmission (4) between ancillary subscribers (2a, b, c, d).

10. Method according to one of Claims 1 to 8, wherein the principal subscriber (1) exclusively interchanges all the data sent by the ancillary subscribers (2a, b, c, d) in the event of a fault in the data transmission (4) between two ancillary subscribers (2b, c).

11. Communication network for carrying out a method according to one of the preceding claims, wherein said network is based on Ethernet technology or on optical waveguide technology, the data transmission being based particularly on a field bus standard.

12. Drive system, particularly for automation purposes, having a communication network according to Claim 11, wherein said system comprises, as principal subscriber (1), an electric controller and/or electric drive regulator and, as ancillary subscribers (2a, b, c, d), electric controllers and/or electric drive regulators.

## Revendications

1. Procédé d'exploitation d'un réseau de communication comprenant au moins un abonné principal (1) et au moins deux abonnés secondaires (2a, b, c, d), lesquels communiquent entre eux au moyen d'un dispositif de transmission de données (3), les abonnés secondaires (2a, b, c, d) communiquant directement entre eux au moyen du dispositif de transmission de données (3) et/ou communiquant indirectement entre eux par l'intermédiaire de l'abonné principal (1) et du dispositif de transmission de données (3) en ce que l'abonné principal (1) échange les données à échanger entre les abonnés secondaires (2a, b, c, d) entre ses bornes de dispositif de transmission de données (1a, 1b), **caractérisé en ce que** l'abonné principal (1) traite ces données de telle sorte qu'elles peuvent être différenciées de données échangées directement entre des abonnés secondaires (2a, b, c, d).

2. Procédé selon la revendication 1, dans lequel un abonné secondaire traite ces données de telle sorte qu'elles peuvent être différenciées de données échangées directement entre des abonnés secondaires (2a, b, c, d).

3. Procédé selon la revendication 1 ou 2, dans lequel ces données reçoivent un marquage particulier par l'abonné principal (1).

4. Procédé selon l'une des revendications précédentes, dans lequel ces données sont soumises à un traitement de données supplémentaire au moyen des abonnés secondaires (2a, b, c, d) et/ou de l'abonné principal (1).

5. Procédé selon la revendication 4, dans lequel le traitement de données supplémentaire est une extrapolation.

6. Procédé selon l'une des revendications précédentes, dans lequel l'abonné principal (1) échange ces données conformément à une fréquence de transmission.

7. Procédé selon l'une des revendications précédentes, dans lequel seuls les abonnés secondaires (2b, c) qui ne peuvent plus communiquer directement entre eux en raison d'une perturbation (4) communiquent par l'intermédiaire de l'abonné principal (1), la perturbation (4) étant notamment détectée et/ou localisée au moyen des abonnés secondaires (2b, c).

8. Procédé selon la revendication 7, dans lequel la perturbation est communiquée à l'abonné principal (1) au moyen du dispositif de transmission de données (3) et l'abonné principal (1) coordonne la communication à l'aide de la perturbation (4) localisée.

9. Procédé selon l'une des revendications précédentes, dans lequel l'abonné principal (1), dans le cas d'une perturbation de la transmission des données (4) entre des abonnés secondaires (2a, b, c, d), échange exclusivement des données définies d'abonnés secondaires (2a, b, c, d) destinées à un abonné secondaire (2a, b, c, d).

10. Procédé selon l'une des revendications 1 à 8, dans lequel l'abonné principal (1), dans le cas d'une perturbation de la transmission des données (4) entre deux abonnés secondaires (2b, c), échange toutes les données émises par les abonnés secondaires (2a, b, c, d).

11. Réseau de communication pour mettre en oeuvre un procédé selon l'une des revendications précédentes, celui-ci se basant sur la technologie Ethernet ou sur la technologie des fibres optiques et la transmission de données se basant notamment sur une norme de bus de terrain.

12. Système d'entraînement, notamment à des fins d'automatisation, comprenant un réseau de communication selon la revendication 11, celui-ci comprenant comme abonné principal (1) un contrôleur électrique et/ou un régulateur d'entraînement électrique et comme abonnés secondaires (2a, b, c, d) des contrôleurs électriques et/ou des régulateurs d'entraînement électriques.
